# EUROPEAN PATENT APPLICATION

(11) **EP 3 738 572 A1**
(43) Date of publication of application: **18.11.2020**
(21) Application number: 20174574.2
(22) Date of filing: 14.05.2020
(51) Int. Cl.: A61G 17/007, A61G 17/06, B32B 1/00

(54) **BAG FOR THE TRANSFER OF CORPSES**

(30) Priority: 16.05.2019 ES 201930819 U
(71) Applicant: Limbo Disseny, S.L., 03008 Alicante (ES)
(72) Inventor: Payá Cayuelas, Guillermo, 03008 Alicante (ES)
(74) Representative: Ibarra Garcia, Isabel

(57) **Abstract**

The invention relates to a bag for the transfer of corpses having a first hollow body with a structure in the shape of a receptacle and a lid-like second body configured for closing an opening of the first hollow body by means of a closure device. The object of the invention is to provide a gas- and liquid-tight bag for use thereof with a conventional casket with the same guarantees. To that end, the closure device has a double-sided adhesive tape including two opposite faces: a front adhesive face and a rear adhesive face. The double-sided adhesive tape is attached to the perimeter portion of the first hollow body by means of its front adhesive face, whereas its rear adhesive face attaches a perimeter area of the second body to the first hollow body in order to close the bag through said double-sided adhesive tape.

## Description

### Object of the Invention

The present invention relates to a bag for the transfer of corpses, comprising a first hollow body with a structure in the shape of a receptacle and a lid-like second body configured for closing an opening of the first hollow body which is demarcated by a perimeter portion which is part of said first hollow body. The bag is closed in a leak-tight manner with the lid-like second body by means of a closure device in which adhesive surfaces participate, such that this closure device is very practical and completely leak-tight.

Based on this premise, the objective of the invention is to obtain a gas- and liquid-tight bag for use thereof with a conventional casket with the same guarantees (in terms of compliance with regulations for transporting corpses) as in a zinc casket, with the difference that the assembly of the conventional casket and the bag of the invention can be taken directly to the crematorium, and it must be highlighted that that said assembly is formed for the most part from over 90% biodegradable, ecological material.

### Technical Problem to be Solved and Background of the Invention

Caskets or coffins are widely known, among which there is a need to mention those which are biodegradable, such as for example, the Spanish utility model with application number U 201130596, comprising in theory a box with a lid and a flexible bag manufactured with biodegradable materials, said flexible bag being configured for being housed inside the box.

The flexible bag comprises a first main hollow body with a structure in the shape of a receptacle and a second body determined by a top lid, each of these two bodies in turn comprising a multilayer structure formed by at least one outer layer of reinforcement material and at least one impermeable layer located on the inside next to the outer layer.

The box is also manufactured with a biodegradable material, such as wood or chipboard, for example.

The flexible bag further includes a closure device formed by an impermeable zipper, such that even though it is a closure device that is effective and practical for achieving the leak-tightness of the closed bag, said impermeable zipper makes the flexible bag more expensive.

The mentioned utility model U 201130596 further comprises anchoring means for securely holding the first main hollow body of the flexible bag on the inner surface of the box; wherein said holding means comprise self-adhesive tapes, with said holding means being able to hinder, in some cases, the operation of introducing the corpse into the flexible bag when the bag is held on the box. This is due to the fact that during said operation strains may be produced in the main body of the flexible bag with the possibility of said main body being able to detach from and come off the box.

### Description of the Invention

To achieve the objectives and to avoid the drawbacks mentioned in the preceding sections, the invention proposes a bag for the transfer of corpses comprising a first hollow body with a structure in the shape of a receptacle and a lid-like second body configured for closing an opening of the first hollow body by means of a closure device; wherein said opening is demarcated along its entire contour by a perimeter portion which is part of the first hollow body.

The lid-like second body is an independent element which, in theory, is separated from the first hollow body, such that both bodies are attached to one another at the moment of closing the bag by means of the closure device.

The closure device comprises a double-sided adhesive tape including two opposite faces: a front adhesive face and a rear adhesive face; wherein said double-sided adhesive tape is attached to the perimeter portion of the first hollow body by means of its front adhesive face, whereas its rear adhesive face is configured for attaching a perimeter area of the second body to the first hollow body in order to close the bag through said double-sided adhesive tape.

The first hollow body comprises a base and a side wall which are attached by means of at least one seam and at least by means of thermal welding, utilizing the inner layers of bioplastic material. A reactive polyurethane material is used as the means for attaching the natural fabric and the inner bioplastic coating; therefore the base and the side wall comprise laminar bodies formed by an outer layer of natural fabric and the inner layer of said bioplastic material.

The perimeter portion of the first hollow body facilitates stably holding the first hollow body of the bag in a temporary manner on a perimeter edge of a box of a coffin; where the first hollow body is placed inside the box of the coffin; such that the first hollow body is kept in position inside the box of the coffin as a result of its perimeter portion which is temporarily held clinging to the perimeter edge demarcating an opening of the box of the coffin; wherein in this position the double-sided adhesive tape, together with a part of the perimeter portion of the first hollow body, are kept under tension adhered to one another on the outside the box of the coffin.

Therefore, the incorporation of the double-sided adhesive tape provides said perimeter portion with certain rigidity that is very useful in keeping the perimeter portion in a stable position when it is supported on the edge of the box of the coffin.

The structure of the bag of the invention significantly simplifies the already known bags, improving tightness and achieving a lower cost.

A series of drawings in which the object of the invention is depicted with a non-limiting, illustrative character is attached below to facilitate better understanding of this specification and as an integral part thereof.

### Description of the Drawings

Figure 1 shows a perspective view a first hollow body which is part of the bag for the transfer of corpses, object of the invention.
Figure 1a shows a section view of the hollow body according to section A-A of Figure 1. The hollow body comprises a side wall and a base as a bottom of the hollow body.
Figure 1b shows a section view similar to Figure 1a, in a phase prior to the attachment of the base and the side wall by means of heat.
Figure 2a shows a sectioned view of the bag for the transfer of corpses comprising the first hollow body and a lid-like second body; where the first hollow body of the bag is located inside a casket.
Figure 2b shows another sectioned view similar to that depicted in Figure 2a, where the first hollow body of the bag is closed by means of the lid-like second body.
Figure 2c shows a view similar to Figure 2b, where the assembly of the bag is inside the casket which is closed by means of a top lid that is part of said casket.

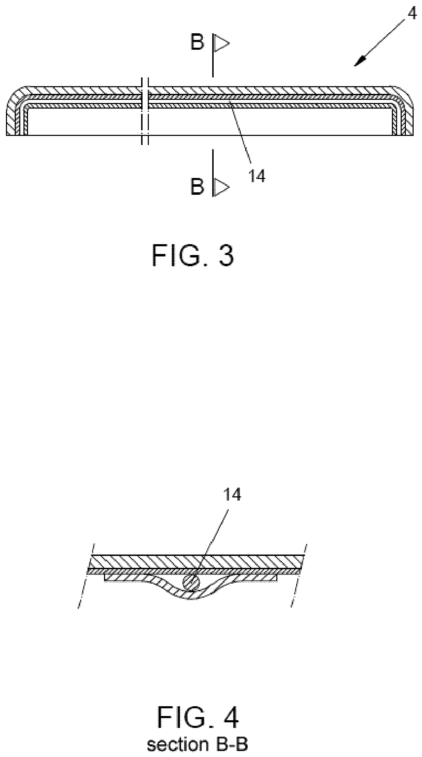

Figure 3 shows a sectioned view of the lid-like second body which is part of the bag.
Figure 4 shows a section view according to section B-B of Figure 3.

### Description of an Embodiment of the Invention

Considering the numbering used in the figures, bag 1 for the transfer of corpses 2 comprises a first hollow body 3 with a structure in the shape of a receptacle and a lid-like second body 4 configured for closing an opening 5 of the first hollow body 1 by means of an adhesive closure device, wherein said opening 5 is demarcated by a perimeter portion 6 which is part of the first hollow body 3.

The lid-like second body 4 is an independent element and is configured for being attached to the perimeter portion 6 of the first hollow body 3 by means of a double-sided adhesive tape 7 including two opposite faces: a front adhesive face 8 and a rear adhesive face 9.

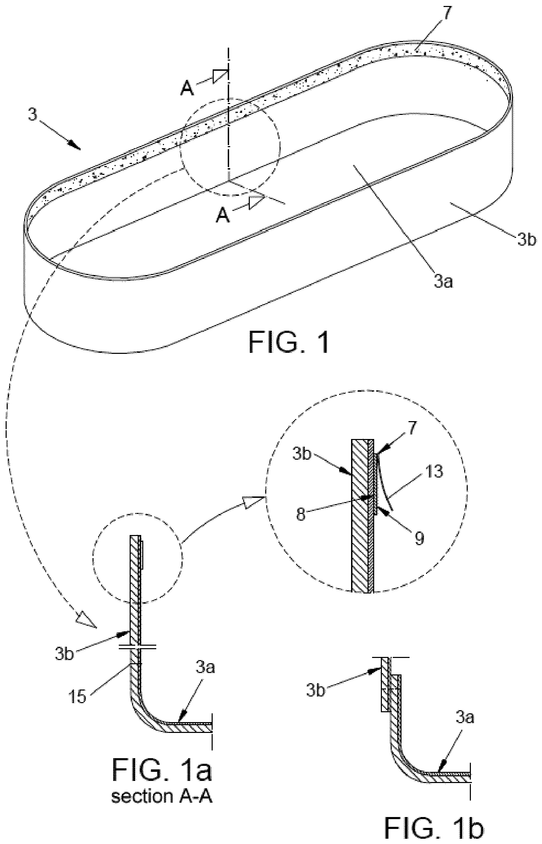

In theory, said double-sided adhesive tape 7 is attached to the perimeter portion 6 of the first hollow body 3 by means of its front adhesive face 8 as shown, for example, in Figures 1 and 1a; whereas its rear adhesive face 9 is configured for being able to attach the second body 4 to the first hollow body 3 for precisely closing the bag 1 through said rear adhesive face 9; all this after introducing the corpse 2 into the first hollow body 3.

The assembly of the bag 1 of the invention is configured for being introduced into a coffin 10 comprising a box 10a and a lid 10b for closing said box 10a.

The perimeter portion 6 of the first hollow body 3 demarcating its opening 5 comprises a structure with certain rigidity as a result of the integration of the double-sided adhesive tape 7.

By means of the perimeter portion 6 of the first hollow body 3, the first hollow body 3 of the bag 1 is stably held in a temporary manner on a perimeter edge 11 of the box 10a of the coffin 10; where the first hollow body 3 is placed inside the box 10a of the coffin 10; such that the first hollow body 3 is perfectly kept in position inside the box 10a of the coffin 10 as a result of its perimeter portion 6 which is temporarily held clinging to the perimeter edge 11 demarcating the opening of the box 10a of the coffin 10; wherein in this position the double-sided adhesive tape 7, together with a part of the perimeter portion 6 of the first hollow body 3, are kept under tension adhered to one another on the outside of the box 10a of the coffin 10.

The stable holding of the first hollow body 3 of the bag 1 inside the box 10a of the coffin 10 is assured by means of side attachments 12 for attaching said first hollow body 3 on an elevated part of two opposite walls of said box 10a. The side attachments 12 comprise a device made of an adhesive material.

With this arrangement that has been described, once the first hollow body 3 of the bag 1 is placed inside the box 10a of the coffin 10, the positioning of said first hollow body 3 along the perimeter portion 6 thereof on the perimeter edge 11 of the box 10a of the coffin 10 is assured; wherein this position of the double-sided adhesive tape 7 is outside of said box 10a.

The corpse 2 is then introduced into the first hollow body 3 and the bag 1 is subsequently closed by means of the lid-like second body 4 which is attached, through one of the faces thereof, to the rear face 9 of the double-sided adhesive tape 7 attached to the first hollow body 3 of the bag 1.

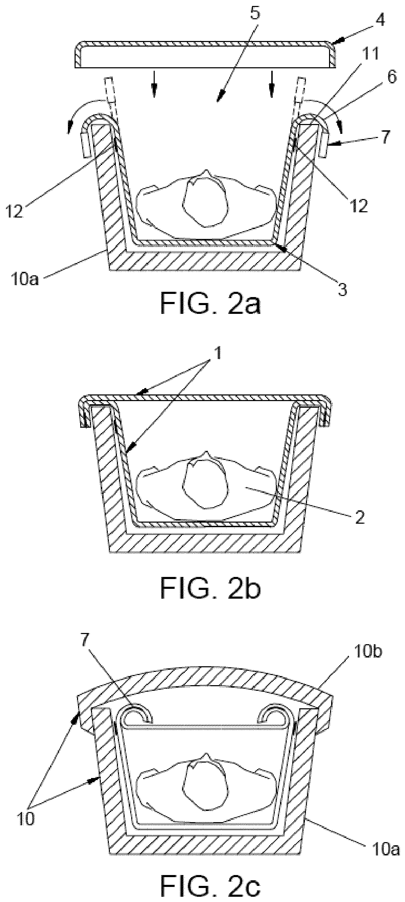

In a subsequent phase, the entire bag 1 is introduced into the box 10a of the coffin 10. To that end, a perimeter part of said bag 1 encompassing the perimeter portion 6 of the first hollow body 3 and a perimeter area of the lid-like second body 4 attached to the first hollow body 3 of the bag 1 is released; all this as shown in Figure 2c.

Finally, the lid 10b is placed on the box 10a of the coffin 10; thereby obtaining a closed coffin suitable for the transfer of the corpse 2 under perfectly leak-tight conditions.

Moreover, the rear face 9 of the double-sided adhesive tape 7 is, in theory, protected by means of a sheet 13 which is first peeled off at the moment of attaching the second body 4 to the double-sided adhesive tape 7 attached to the first hollow body 3.

The second body 4 of the bag 1 may further include:
- A transparent window for the identification of the corpse 2.
- A frame with rods 14 which provides shape to the bag 1, preventing the second body 4 of the bag 1 from falling on the face and body of the corpse 2.

Moreover, the bag 1 may include a filter as the only channel for gas exchange with the outside, and said bag 1 could also be manufactured with a biodegradable material as well as with a non-biodegradable plastic material such as polyurethane, polyethylene, Texpun, etc. Another version of the bag would be the combination of plastic and fabric (one or more textile layers) attached or not attached to one another.

In one embodiment of the invention, the bag 1 is manufactured with a natural fabric, preferably non-chemically treated cotton (the purpose being to prevent any emission of toxic gases during cremation) having a density and mechanical strength suitable for the weight of a corpse, on which a sheet of bioplastic (which remains on the inside) is applied. It is usually heat-laminated at about 95-100 degrees until both materials (cotton and bioplastic) adhere to one another.

To attach the two products (cotton and bioplastic), an adhesive, such as for example, reactive polyurethane (PU), is used along with simultaneous heat application.

The natural fabric is the structural element of the laminate and the bioplastic confers it with leak-tightness qualities. The laminar material of the bag 1 made up of the natural fabric and bioplastic has an estimated weight of 237 g/m².

The essentiality of the invention lies in the morphology of the perimeter portion 6 of the first hollow body 3 of the bag 1 demarcating its opening 5, and the way of covering said opening 5, in addition to providing the bag 1 with the double-sided adhesive tape 7.

The purpose of the frame with rods 14 is to keep the lid-like second body 4 with certain tension and rigidity so that no creases are produced over the body of the corpse 2;
In one embodiment of the invention, the hollow body 3 comprises a base 3a and a side wall 3b which are attached as described below:
The attachment process has two phases, in a first phase a simple seam 15 is made with a thread and heat sealing (for sealing the seam) is then performed. It must be pointed out that the entire product (cotton, reactive PU, bioplastic) is sewn; it is ecological and over 90% biodegradable.

The attachment between the base 3a and the side wall 3b is performed in two phases:
- A first phase in which the seam 15 is made with a thread (such as any type of fabric).
- A second phase of heat sealing the seam (the holes created when making the seam 15 of the first phase are sealed by means of ultrasound); with the areas adjacent to the seam 15 also being attached.

The attachment of the base 3a and the side wall 3b is performed at an approximate level of about 15 cm from the converging edges of both laminar bodies 3a, 3b. The attachment is thereby performed for safety reasons to prevent liquids from seeping out.

The use of the bag 1 of the invention has the advantage of being extremely comfortable, given that by means of the double-sided adhesive tape 7 the first hollow body 3 can be readily and rapidly adhered to the second body 4 by pressing on the outer surface of the box 10a of the coffin 10, with everything being highly integrated and extremely leak-tight.

## Claims

1. A bag for the transfer of corpses, comprising a first hollow body (3) with a structure in the shape of a receptacle and a lid-like second body (4) configured for closing an opening (5) of the first hollow body (3) by means of a closure device; wherein said opening (5) is demarcated along its entire contour by a perimeter portion (6) which is part of the first hollow body (3); **characterized in that**:
- the lid-like second body (4) is an independent element:
- the closure device comprises a double-sided adhesive tape (7) including two opposite faces: a front adhesive face (8) and a rear adhesive face (9); wherein said double-sided adhesive tape (7) is attached to the perimeter portion (6) of the first hollow body (3) by means of its front adhesive face (8), whereas its rear adhesive face (9) is configured for attaching a perimeter area of the second body (4) to the first hollow body (3) in order to close the bag (1) through said double-sided adhesive tape (7).

2. The bag for the transfer of corpses according to claim 1, **characterized in that** the lid-like second body (4) comprises a frame with rods (14).

3. The bag for the transfer of corpses according to any one of the preceding claims, **characterized in that** the first hollow body (3) comprises a base (3a) and a side wall (3b) which are formed by laminar bodies integrating outer layers of natural fabric and inner layers of bioplastic: wherein the hollow body (3) and the base (3a) are attached by means of at least one seam (15) and by means of thermal welding through the inner layers of bioplastic material, which is attached to the natural fabric by means of a reactive polyurethane material.
